# FASCICULE DE BREVET EUROPEEN

(11) **EP 0 520 871 B1**
(45) Date de publication et mention de la délivrance du brevet: **28.02.1996**
(21) Numéro de dépôt: 92401738.7
(22) Date de dépôt: 22.06.1992
(51) Int. Cl.: F02K 1/70

(54) **Perfectionnement aux inverseurs de poussée de moteur à réaction**
Verbesserte Schubumkehrvorrichtung für ein Strahltriebwerk
Improved thrust reverser for a jet engine

(30) Priorité: 24.06.1991 FR 9107715
(43) Date de publication de la demande: 30.12.1992
(73) Titulaire: SOCIETE DE CONSTRUCTION DES AVIONS HUREL-DUBOIS, F-92360 Meudon la Forêt (FR)
(72) Inventeur: Standish, Robert, F-78120 Gazeran (FR); Frank, Joel, F-75015 Paris (FR); Meyer, Pascal, F-75014 Paris (FR)
(74) Mandataire: Sauvage, Renée

(56) Documents cités:
- EP-A- 0 301 939
- EP-A- 0 368 725
- US-A- 3 280 561

## Description

La présente invention concerne un inverseur de poussée de moteur à réaction à double flux.

Ce type de moteur connu comporte un corps de moteur central générant un flux de gaz chauds constituant une veine d'éjection principale, le corps de moteur étant entouré par un capotage périphérique écarté du corps de moteur pour ménager avec celui-ci un canal annulaire où circule un flux froid de gaz provenant d'une soufflante (ou fan) située à l'amont du moteur. Dans ce type de moteur, divulgué, par exemple, dans EP-A-301939, l'inverseur de poussée proprement dit est constitué de portes basculantes susceptibles, en position fermée ou de croisière, de s'intégrer dans la paroi du capotage afin de dégager le canal annulaire de flux froid, et, en position déployée ou d'inversion de poussée, de basculer pour obturer ledit canal annulaire et dégager dans le capotage des passages permettant une déviation du flux froid vers l'extérieur et vers l'avant, chacune des portes d'inverseur présentant une peau externe et une peau interne et étant équipée, à son extrémité amont, d'un becquet s'étendant transversalement à partir de la peau interne de porte et dont le rôle est de faciliter l'orientation du flux dévié vers l'amont.

La présente invention entend apporter des améliorations à ce type d'inverseur par une modification au niveau du becquet permettant d'augmenter l'efficacité de l'action d'inversion tout en augmentant le débit du flux froid inversé.

En effet, on a pu constater que pour certaines dispositions d'inverseurs, notamment ceux qu'on utilise pour les moteurs montés en nacelle latérale, la géométrie des portes connues jusqu'à présent entraînait une limitation de l'efficacité du moteur et/ou du débit du flux inversé. Les dispositions de l'invention permettent de remédier à cet inconvénient en améliorant simultanément l'efficacité du moteur et le débit du flux inversé.

Ceci est obtenu, selon l'invention, par le fait que l'on donne au becquet un angle par rapport à la peau interne des portes tel que, en position déployée ou d'inversion de poussée, le becquet forme un angle supérieur à 0° et inférieur à environ 20° par rapport à une parallèle à l'axe du moteur, en s'éloignant dudit axe.

Pour cela, on fait en sorte que l'angle formé par le becquet et la paroi interne de porte, contrairement aux dispositions connues jusqu'à présent, soit supérieur à 90° et de préférence compris entre 105 et 110°.

Du fait de l'inclinaison du becquet, selon une autre caractéristique de l'invention, on tend à ce qu'en position de portes déployées, la section située dans le plan passant par l'extrémité amont du becquet et le bord amont du passage ménagé dans le capotage pour l'inversion, soit au moins égale à la section dudit passage ménagé dans le capotage, de sorte que la veine de flux inversé subisse le moins possible l'effet d'étranglement dû à la déviation.

Par ailleurs, la configuration du becquet lui-même peut être variée. Ainsi, le becquet peut être constitué, de façon connue en soi, par une plaque plane ou bien il peut présenter un profil courbe à concavité orientée vers l'intérieur des portes ou encore un profil en forme de dièdre, c'est-à-dire à deux pentes différentes.

Enfin on comprendra que pour une même porte, selon la géométrie de celle-ci, l'angle que le becquet forme avec la peau interne des portes peut varier dans le sens de la longueur du becquet et peut évoluer entre 90° et 110°.

On décrira maintenant l'invention, à titre d'exemple non limitatif, en référence aux dessins annexés dans lesquels :
- la figure 1 représente schématiquement en coupe la zone arrière d'un moteur de type connu, équipé d'un inverseur à porte représenté en position fermée ou de croisière ;
- la figure 2 représente un inverseur selon l'invention montrant une porte en position déployée ou d'inversion, le becquet étant réalisé selon une première forme de réalisation ;
- les figures 3 et 3a montrent deux autres formes de réalisation du becquet de l'invention en forme de dièdre ;
- la figure 4 représente une forme de becquet creuse ;
- la figure 5 représente schématiquement une porte d'inverseur selon l'invention vue en plan et présentant des coins coupés, et
- les figures 6 et 6a sont des coupes selon les lignes AA et BB de la figure 5 montrant une inclinaison évolutive du becquet.

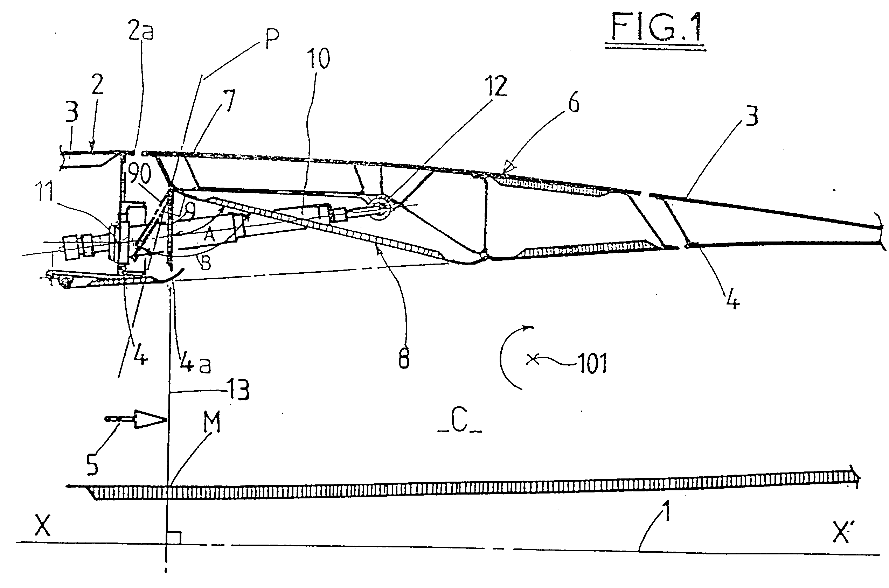

A la figure 1 on a représenté schématiquement en traits pleins un type d'inverseur à portes connu. On a indiqué en 1 l'axe moteur X-X', en M la paroi du corps de moteur central, en 2 (de façon générale) un capotage périphérique, entourant le corps de moteur, et comportant une paroi externe 3 et une paroi interne 4 délimitant, avec la paroi M, un canal périphérique C dans lequel circule un flux de gaz 5 provenant par exemple d'une soufflante amont (non représentée).

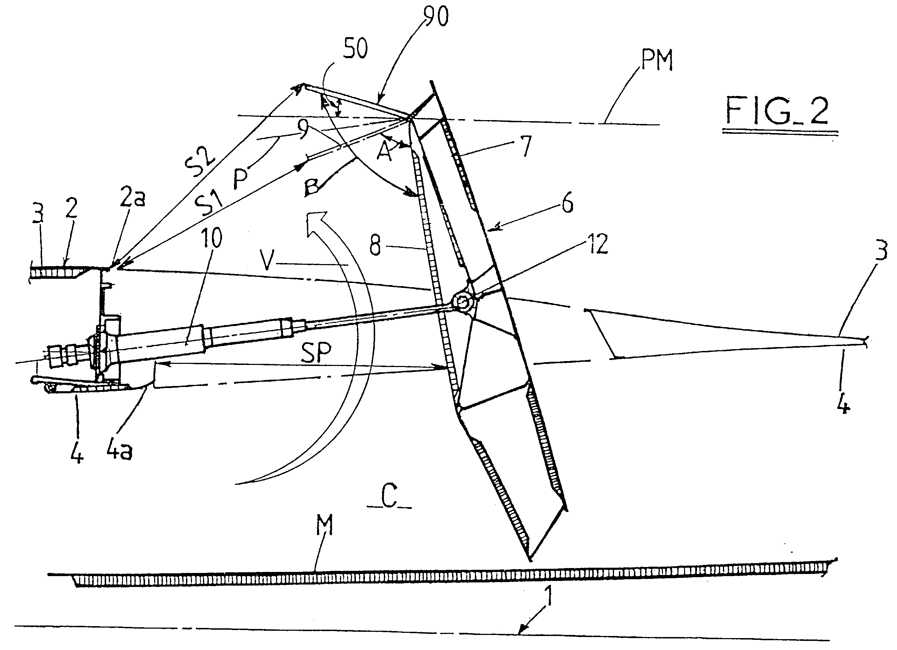

Des portes basculantes, dont l'une est désignée de façon générale en 6, articulées autour d'axes 101, et constituées d'une peau externe 7 et d'une peau interne 8, sont destinées, en position de croisière, à s'étendre dans le prolongement du capotage 2 en libérant totalement le canal C. Ces portes sont équipées à l'avant d'un becquet 9 lié aux peaux 7 et/ou 8 et s'étendant transversalement à celles-ci. Un vérin 10, articulé en 11 à la structure fixe du capotage et en 12 à la porte, permet de basculer celle-ci comme représenté à la figure 2.

Comme on le voit, le becquet 9 des structures connues s'étend, en position de porte fermée, suivant une ligne 13 perpendiculaire à l'axe moteur 1 et forme, avec la peau interne 8 de porte, un angle A inférieur à 90° (la perpendiculaire à la peau interne est indiquée en P).

Au contraire, selon l'invention, on fait en sorte que le becquet ait la position représentée en 90 en formant, avec la peau interne de porte 8, un angle B supérieure à 90°.

On pourra, comme représenté en 4a, prévoir une pièce courbée clans le prolongement de la paroi interne 4 du capotage pour faciliter le guidage du flux dévié lorsque les portes sont ouvertes.

La figure 2 représente schématiquement une porte 6, équipée du becquet selon l'invention, en position déployée.

Dans les figures 1 et 2, le becquet 90 correspond à une première forme de réalisation et il a la forme d'une plaque plane. L'angle B entre la peau interne 8 et le becquet 90 est compris en 105 et 110°.

En position de porte ouverte, le becquet 90 se trouve au-dessus de la ligne PM parallèle à l'axe moteur 1, l'angle 50 entre la ligne PM et le becquet étant inférieur à 20° et de préférence inférieur à 10°.

On voit nettement sur la figure 2 que, dans le cas du becquet classique indiqué en trait interrompu en 9, la veine de flux froid dévié V est gênée dans son mouvement, alors que le redressement du becquet en 90 selon l'invention permet d'augmenter l'efficacité en ménageant une section S2, entre le bord amont du becquet 90 et le rebord aval 2a du puits d'inversion créé par le basculement de la porte, qui est supérieure à la section SI ménagée, dans le cas d'un becquet 9 entre ce dernier et le rebord 2a. On comprend qu'il est plus aisé d'obtenir une section S2 au moins égale, si.non supérieure, à la section SP de passage du flux froid au ni.veau du passage dans le capotage, cette section SP étant mesurée entre la plaque courbée 4a et la porte 6.

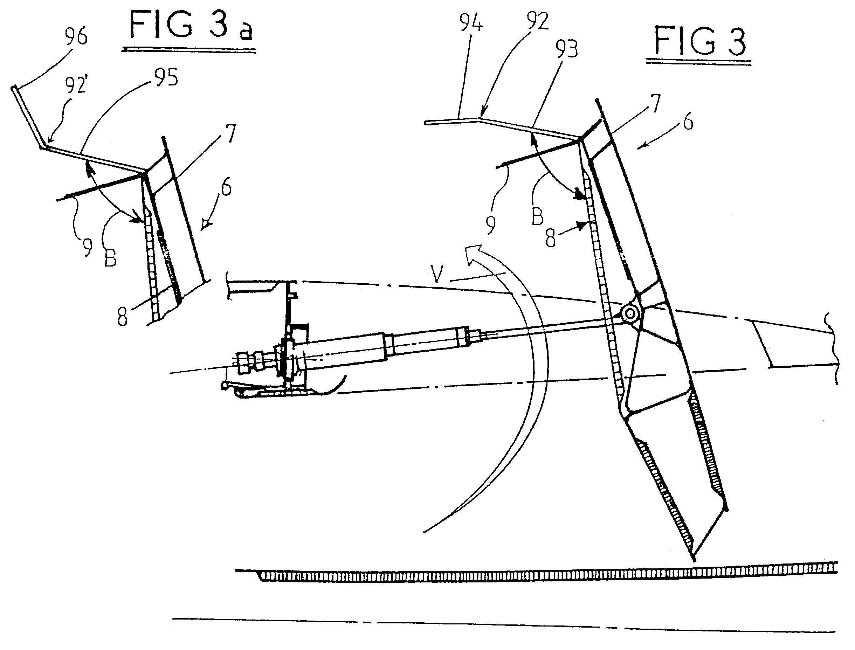

Dans la forme de réalisation de la figure 3, on a prévu un becquet 92 en forme de dièdre, c'est-à-dire avec une partie 93 formant un angle B obtus, prolongé par une partie 94 s'abaissant vers l'intérieur de porte, l'ensemble créant urne concavité interne.

Une autre disposition avec un becquet 92′ en forme de dièdre est représentée à la figure 3a, mais ici, le dièdre est inversé, c'est-à-dire qu'une première partie 95 forme un angle B obtus avec la porte, la partie 95 étant prolongée par une partie 96 relevée vers l'extérieur.

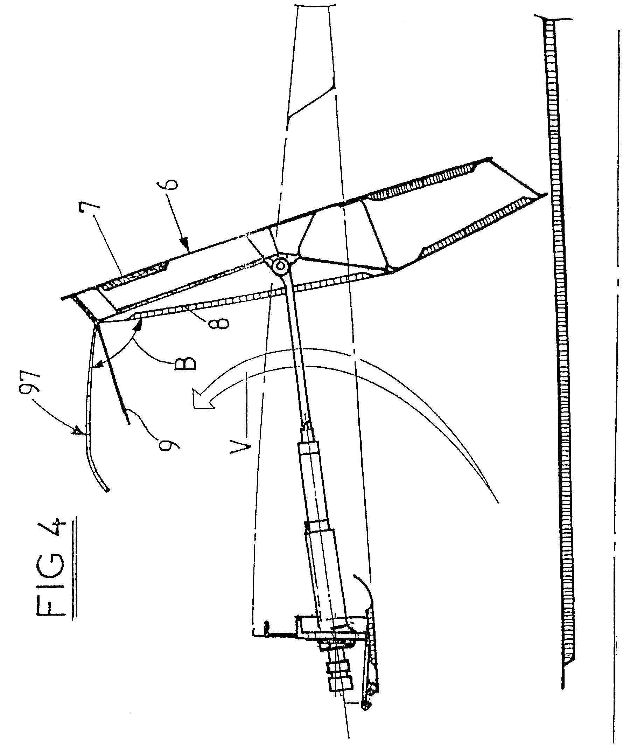

La figure 4 montre une variante de réalisation dans laquelle le becquet 97 présente une forme légèrement incurvée avec concavité orientée vers l'intérieur de porte, l'angle B étant toujours supérieur à 90°.

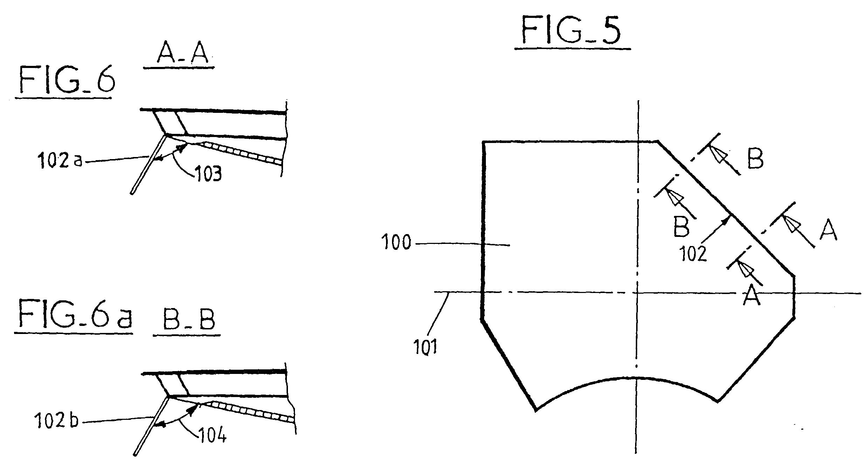

Comme on l'a déjà indiqué, l'invention trouve une application particulièrement intéressante dans le cas de portes 100 à coins coupés comme celle qui est représentée en plan à la figure 5. Dans ce cas, il se pourra que l'inclinaison du becquet 102, le long des coins coupés, ait une inclinaison variable. Ainsi à une extrémité du becquet 102, comme le montre la figure 6 en 102a, l'angle 103 entre becquet et intérieur de porte est plus faible ou plus grand que l'angle 104 (par exemple de 120°) mesuré à l'autre extrémité 102b (coupe B-B).

Naturellement, l'invention ne doit pas être considérée comme limitée aux exemples représentés mais s'étend à toutes les modifications ou adjonctions à la portée d'un homme de l'art.

## Revendications

1. Inverseur de poussée pour moteur à réaction à double flux comportant un corps de moteur central et un capotage périphérique (2) écarté du corps de moteur pour ménager avec lui un canal annulaire (C) de circulation d'un flux froid (5,V), l'inverseur proprement dit étant constitué de portes basculantes (6,100) susceptibles, en position fermée ou de croisière, de s'intégrer dans la paroi du capotage (2) et, en position déployée ou d'inversion de poussée, de basculer pour obturer le canal annulaire (C), et dégager dans le capotage des passages permettant une déviation du flux froid (5,V) vers l'extérieur et vers l'avant, chacune des portes de l'inverseur présentant une peau externe (7) et une peau interne (8) et étant équipée, à son extrémité amont, d'un becquet (90,92,92',97,102) s'étendant transversalement à partir de la peau interne (8) de porte, caractérisé en ce que, en position déployée ou d'inversion de poussée, le becquet (90,92,92',97,102) forme un angle (50;B,103,104) supérieure à 0° et inférieur à environ 20 degrés par rapport à une parallèle (PM) à l'axe (1) du moteur, en s'éloignant dudit axe.

2. Inverseur de poussée selon la revendication 1, caractérisé en ce que l'angle (50) formé par le becquet (90) et une parallèle (PM) à l'axe (1) du moteur est inférieur à 10°.

3. Inverseur de poussée selon la revendication 1 ou 2, caractérisé en ce que l'angle (B) formé par le becquet (90) et la peau interne (8) de porte est supérieur à 90° et, de préférence, est compris entre 105° et 110°.

4. Inverseur de poussée selon l'une quelconque des revendications 1 à 3, caractérisé en ce que le becquet (90) est constitué, de façon connue en soi, par une plaque plane.

5. Inverseur de poussée selon l'une quelconque des revendications 1 à 3, caractérisé en ce que le becquet (92,92',97) présente un profil courbe dont la concavité est orientée vers l'intérieur des portes.

6. Inverseur de poussée selon l'une quelconque des revendications 1 à 3, caractérisé en ce que le becquet (92,92') présente un profil en forme de dièdre.

7. Inverseur de poussée selon l'une quelconque des revendications 1 à 6, caractérisé en ce que, en position de portes déployées, la section (S2) située dans le plan passant par l'extrémité amont du becquet (90) et le bord amont (2a) du passage ménagé dans le capotage (2) pour l'inversion du flux froid, est au moins égale à la section (SP) dudit passage ménagé dans le capotage.

8. Inverseur de poussée selon l'une quelconque des revendications 1 à 7, dans lequel lesdites portes basculantes (100) présentent en plan, une configuration avec coins coupés, caractérisé en ce que lesdits coins coupés sont équipés desdits becquets (102).

9. Inverseur de poussée selon l'une quelconque des revendications 3 à 8, caractérisé en ce que, dans la longueur du becquet (102), l'angle (103,104) qu'il forme avec la peau interne (8) de porte est variable et peut évoluer entre 90° et 110°.

## Claims

1. Thrust reverser for a dual-flow jet engine, comprising a central engine body and a peripheral cowling (2) remote from the engine body in order to make with it an annular flow channel (C) for a cold flow (5,V), the reverser itself consisting of tilting doors (6,100) capable, in the closed or cruise position, of being integrated into the wall of the cowling (2) and, in the deployed or thrust-reversal position, of tilting in order to shut off the annular channel (C) and to clear, in the cowling, passages permitting an outward and forward deflection of the cold flow (5,V), each of the doors of the reverser having an outer skin (7) and an inner skin (8) and being equipped, on its upstream end, with an deflector nose (90,92,92',97,102) extending transversely from the inner door skin (8), characterized in that, in the deployed or thrust-reversal position, the deflector nose (90,92,92',97,102) makes an angle (50 ; B,103,104) greater than 0° and less than about 20° in relation to a line parallel (PM) to the axis (1) of the engine, away from said axis.

2. Thrust reverser according to claim 1, characterized in that the angle (50) made by the deflector nose (90) and a line parallel (PM) to the axis (1) of the engine is less than 10°.

3. Thrust reverser according to claim 1 or 2, characterized in that the angle (B) made by the deflector nose (90) and the inner door skin (8) is greater than 90° and, preferably, lies between 105° and 110°.

4. Thrust reverser according to anyone of claims 1 to 3, characterized in that the deflector nose (90) is constituted, in a manner known per se, by a plane plate.

5. Thrust reverser according to anyone of claims 1 to 3, characterized in that the deflector nose (92,92',97) has a curved profile whose concavity is oriented towards the interior of the doors.

6. Thrust reverser according to anyone of claims 1 to 3, characterized in that the deflector nose (92,92') has a dihedron-shaped profile.

7. Thrust reverser according to anyone of claims 1 to 6, characterized in that, in the deployed-door position, the section (S2) located in the plane passing through the upstream end of the deflector nose (90) and the upstream edge (2a) of the passage made in the cowling (2) for the reversal of the cold flow, is at least equal to the section (SP) of said passage made in the cowling.

8. Thrust reverser according to anyone of claims 1 to 7, in which said tilting doors (100) have, in plan view, a configuration with cut corners, characterized in that said cut corners are equipped with said deflector noses (102).

9. Thrust reverser according to anyone of claims 3 to 8, characterized in that the angle (103,104) made by the deflector nose and the inner door skin (8) is variable between 90° and 110° along the length of the deflector nose (102).

## Patentansprüche

1. Schubumkehrvorrichtung für ein Zweistrom-Strahltriebwerk mit einem zentralen Motorkörper und einer Umfangsverkleidung (2), die vom Motorkörper entfernt ist, um mit diesem einen ringförmigen Kanal (C) zum Umlauf eines Kaltstroms (5, V) zu bilden, wobei die eigentliche Umkehrvorrichtung aus Schwingtüren (6, 100) besteht, die sich in geschlossener oder Reiseflugstellung in die Wand der Verkleidung (2) integrieren können und in geöffneter oder Schubumkehrstellung schwingen können, um den ringförmigen Kanal (C) zu schließen und in der Verkleidung Durchgänge freizulegen, die eine Ableitung des Kaltstroms (5,V) nach außen und nach vorne gestatten, wobei jede der Türen der Umkehrvorrichtung eine Außenhaut (7) und eine Innenhaut (8) aufweist und an ihrem stromauf gelegenen Ende mit einem Spoiler (90, 92, 92', 97, 102) versehen ist, der sich von der Innenhaut (8) der Tür aus quer erstreckt, dadurch gekennzeichnet, daß der Spoiler (90, 92, 92', 97, 102) in geöffneter oder Schubumkehrstellung einen Winkel (50; B, 103, 104) größer als 0° und kleiner als etwa 20° mit einer Parallelen (PM) zur Achse (1) des Motors bildet, wobei er sich von dieser Achse entfernt.

2. Schubumkehrvorrichtung nach Anspruch 1, dadurch gekennzeichnet, daß der von dem Spoiler (90) und einer Parallelen (PM) zur Achse (1) des Motors gebildete Winkel (50) kleiner als 10° ist.

3. Schubumkehrvorrichtung nach Anspruch 1 oder 2, dadurch gekennzeichnet, daß der von dem Spoiler (90) und der Innenhaut (8) der Tür gebildete Winkel (B) größer als 90° ist und vorzugsweise zwischen 105° und 110° liegt.

4. Schubumkehrvorrichtung nach einem der Ansprüche 1 bis 3, dadurch gekennzeichnet, daß der Spoiler (90) auf an sich bekannte Weise aus einer ebenen Platte besteht.

5. Schubumkehrvorrichtung nach einem der Ansprüche 1 bis 3, dadurch gekennzeichnet, daß der Spoiler (92, 92', 97) ein gekrümmtes Profil aufweist, dessen Konkavität auf das Innere der Türen zu gerichtet ist.

6. Schubumkehrvorrichtung nach einem der Ansprüche 1 bis 3, dadurch gekennzeichnet, daß der Spoiler (92, 92') ein Profil in Diederform besitzt.

7. Schubumkehrvorrichtung nach einem der Ansprüche 1 bis 6, dadurch gekennzeichnet, daß, in der Stellung mit geöffneten Türen, der Querschnitt (S2), der in der Ebene gelegen ist, die durch das stromauf gelegene Ende des Spoilers (90) und den stromauf gelegenen Rand (2a) des in der Verkleidung (2) vorgesehenen Durchgangs für die Umkehrung des Kaltstroms verläuft, mindestens gleich dem Querschnitt (SP) dieses in der Verkleidung vorgesehenen Durchgangs ist.

8. Schubumkehrvorrichtung nach einem der Ansprüche 1 bis 7, in der diese Schwingtüren (100) in Draufsicht eine Konfiguration mit geschnittenen Ecken haben, dadurch gekennzeichnet, daß diese geschnittenen Ecken mit diesen Spoilern (102) ausgerüstet sind.

9. Schubumkehrvorrichtung nach einem der Ansprüche 3 bis 8, dadurch gekennzeichnet, daß der Winkel (103, 104), den der Spoiler (102) mit der Türinnenhaut (8) bildet, in der Länge des Spoilers (102) veränderlich ist und sich zwischen 90° und 110° ändern kann.
